**Europäisches Patentamt**

**European Patent Office**

**Office européen des brevets**

(11) Publication number: **0 089 916**
**B1**

(12) # EUROPEAN PATENT SPECIFICATION

(45) Date of publication of patent specification: **25.02.87**

(51) Int. Cl.⁴: **G 01 L 1/12**

(21) Application number: **83710010.6**

(22) Date of filing: **17.03.83**

(54) Magnetoelastic force transducer.

(30) Priority: **24.03.82 SE 8201870**
**24.03.82 SE 8201871**

(43) Date of publication of application:
**28.09.83 Bulletin 83/39**

(45) Publication of the grant of the patent:
**25.02.87 Bulletin 87/09**

(84) Designated Contracting States:
**DE FR GB IT SE**

(56) References cited:
**DE-A-2 756 701**
**DE-A-2 756 701**
**SE-A- 405 766**

(73) Proprietor: **ASEA AB**
**S-721 83 Västeras (SE)**

(72) Inventor: **Valdemarsson, Stefan, Dipl.-Ing.**
**Heimersväg 18**
**S-723 55 Västeras (SE)**
Inventor: **Nordvall, Jan, Dipl.-Ing.**
**Rundhällsvägen 10**
**S-722 31 Västeras (SE)**

(74) Representative: **Boecker, Joachim, Dr.-Ing.**
**Rathenauplatz 2-8**
**D-6000 Frankfurt a.M. 1 (DE)**

The file contains technical information submitted after the application was filed and not included in this specification

Courier Press, Leamington Spa, England.

## Description

The invention relates to a magnetic force transducer according to the introductory part of claim 1. Such a transducer is e.g. known from SE—A—405 766.

A common type of magnetoelastic force transducer comprises a force-subjected magnetic core built up of magnetoelastic sheets, said core being provided with four through-holes for two windings perpendicular to each other, one winding being an excitation winding which is supplied from an AC source for generating a magnetic flux in the core, the other winding being a measuring winding for sensing the magnitude of the magnetic flux passing through the measuring winding. The magnitude of this flux depends on the magnitude of the external force applied to the core.

The flux, sensed by the measuring winding, gives rise to a signal, the variations of which are not totally linearly proportional with the strength of the applied external force. It has been found that this nonlinearity has different signs depending upon if the flux change, caused by the external force and sensed by the measuring winding, substantially is to be attributed to compressive or tensile mechanical stresses.

It is previously known, for example from SE—A—405 766, that the overall linearity can be improved by constructing a transducer with two measuring portions, one of which is substantially subjected to compressive stress and the other substantially subjected to tensile stress, both stresses being proportional to the external force, whereby the signals from the respective measuring portions are summed up in suitable proportions.

However, the above-described embodiments display a relatively great and in many cases difficultly controlled zero voltage, which is caused by internal stresses and crystal orientation in the sheet material, which have arisen, among other things, during the manufacturing process, for example during rolling.

The invention aims at developing a magnetoelastic force transducer of the above-mentioned type which enjoys high linearity, an extremely low zero voltage and simplicity of construction at the same time. It is a further object of the invention to find an inexpensive way to design such force transducers for very high forces to be measured.

To achieve the firstly mentioned aim of the invention a magnetic force transducer according to the preamble of claim 1 is suggested which is characterized by the features of the characterizing portion of claim 1.

Further embodiments of the invention are characterized by the features of the subsequent claims, whereby in particular claim 7 to 10 deal with embodiments designed for the application of very high forces.

The invention will now be described in detail with reference to the accompanying drawings, in which:

Figure 1 shows the principle of a transducer according to the invention,

Figure 2 shows a method of applying the force to be measured,

Figure 3 shows a preferred embodiment of the invention,

Figure 4 shows one way of how the force transducer according to Figure 3 can be provided with force shunts integrated in the sheet section,

Figure 5 shows how separate shunt sheets for additional force shunting can be constructed,

Figures 6 and 7 show examples of how measuring sheets and shunt sheets can be composed into a force transducer for great forces.

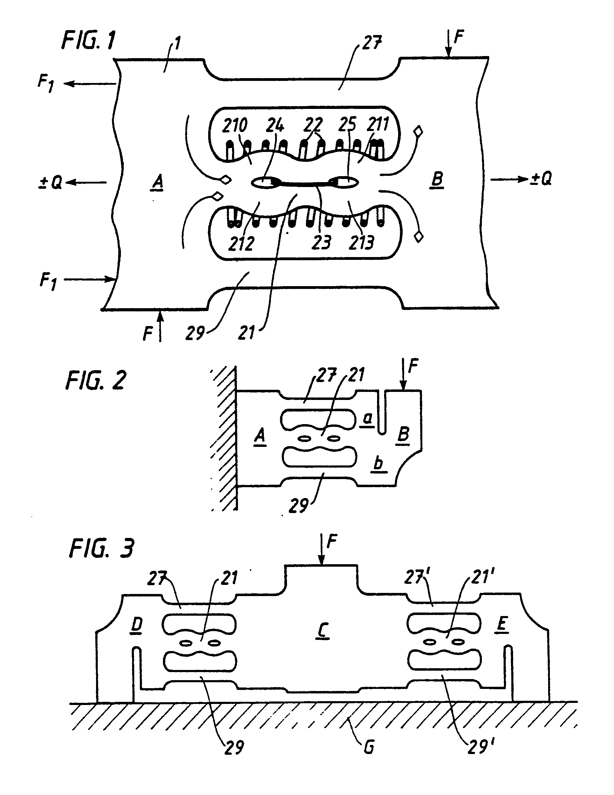

The fundamental principle of working of a transducer element according to the invention is shown in Figure 1. The core 1 is here formed with a central beam 21, which is horizontal in the figure. The beam has a longitudinal symmetry plane through its longitudinal axis, extending through the mid-point of each cross-section of the beam, and being perpendicular to the plane of the paper. The beam is also in prinicple, but not necessarily, symmetrical with respect to a plane extending through the midpoint of the beam perpendicularly to the above-mentioned longitudinal axis of the beam, that is, perpendicularly to the plane of the paper. The magnetic flux in the beam is excited in its longitudinal direction by an alternating current supplied excitation winding 22 wound around the beam 21. A measuring winding 23 is wound through the apertures 24, 25 which are symmetrically located with respect to the longitudinal symmetry plane of the beam and located on one side each of the transversal symmetry plane of the beam.

At either end the beam 21 changes into force introduction regions A and B having greater height — measured in the vertical direction of the beam in Figure 1 — than the beam. In addition, the regions A and B are connected through additional beams 27, 29 on either side of the measuring beams 21, which beams on the one hand constitute return paths for the magnetic flux and on the other hand bring about a substantially parallel guiding of the force introduction regions and thereby double bending of the measuring beam.

The force couple F constitutes the force to be measured and the equally great and oppositely directed reaction force. This force couple subjects the beams 21, 27, 29 to pure double bending, i.e. the beams are bent into S-shape with a point of inflection in the centre. Further, the force couple F causes the reaction forces $F_1$. In addition, as will be described below, a force Q which is proportional to the force F may be introduced, said force Q generating an additional axial stress on the beam 21.

In unloaded state F = 0 and Q = 0, no zero signal will occur in the measuring winding 23 since the beam 21 is symmetrical with respect to the apertures 24, 25. This, however, applies only if the magnetically preferred direction, determined by rolling stresses and by grain orientation and crystal orientation, is uniform throughout the beam 21 in its longitudinal and transverse directions.

When the beam system is subjected to the force couple F and the reaction force couple $F_1$, as mentioned the beam 21 will be subjected to double bending. Such bending causes compressive stresses in the beam portions 211, 212 and equally great tensile stresses in the beam portions 210, 213.

The magnetic resistance of magnetoelastic material varies with mechanical stress so that, for example, it is decreased upon tensile stresses and increased upon compressive stresses. This circumstance applies, for example, to iron with moderate alloying additives. Thus, when being loaded, according to Figure 1, the magnetic resistance of the portions 210 and 213, which will be subjected to tensile stresses, will reduce, and magnetic resistance of the portions 211 and 212, which will be subjected to compressive stresses, will increase. This results in part of the total flux in the beam 21 now passing through the measuring winding 23 from portion 210 to 213 or vice versa. The part of the flux which passes through the winding 23, i.e. the measuring flux, is proportional to the difference between the tensile and compressive stresses which occur in the portions 210, 213 and 211, 212, respectively, of the beam 21, of course taking the sign into consideration. Thus, in principle the measuring flux is proportional to the force F.

However, it has proved that the non-linearity emanating from the portions 210, 213 subjected to tensile stresses is not exactly as great as the one emanating from the portions 211, 212 subjected to compressive stresses. This means that a complete compensation for the non-linearity of the output singal is not obtainable with the device according to Figure 1.

An improved linearity can be obtained by introducing a force Q which is proportional to the force F (see Figure 1). To achieve this, different means can be employed.

For example, as shown in Figure 2, one side of the transducer may be fixedly attached whereas the other side is loaded vertically with the force to be measured. By making one force introduction region B unsymmetrical, with an area *a* having smaller width, measured in the longitudinal direction of the beam 21, above the beam 21, and an area *b* having larger width below the measuring beam in the figure, a tensile stress, proportional to the external applied force F, is obtained superimposed on the desired double bending in the beam 21. By a suitable shape and dimensioning, the ratio between F and Q may be given such a value that a very good linearity is attained.

In a preferred embodiment, shown in Figure 3, the transducer is built up of two equal transducer elements according to Figure 2, which are integrally united with a common central portion C on which the external force is applied. The structure has two outer portions D and E on which it rests against a fixed base G. In this way the embodiment with external rigid fastening, as in Figure 2, is avoided.

The transducer shown in Figure 3 is primarily suited for a measuring range of the order of magnitude of 1 kN. For higher measuring ranges some form of force shunting must be resorted to. The problem is then to accomplish a force shunting which does not deteriorate the good properties of said force transducer. A prerequisite for this is that the materials in the shunt elements and the measuring elements have exactly the same mechanical hysteresis- and creep-characteristics and furthermore exactly the same temperature dependence for the coefficient of elasticity, the latter in order to prevent a temperature-dependent shunting relationship. All these demands for similarity can hardly be fulfilled otherwise than by using the same material in shunt elements and in measuring elements.

A further condition for obtaining exactly the same relative, mechanical hysteresis- and creep-behaviour in shunt elements and measuring elements and thereby obtaining automatic compensation for these faults, is that there are such low stresses in both these elements that the relative, mechanical hysteresis and the creep are independent of the stress.

In order also to eliminate the effect of thermal creep, it is most suitable for the shunt elements to be constructed as beams having such a low height that the temperature equalization between the pressure side of the beam (elevated temperature) and the tension side of the beam (reduced temperature) occurs so rapidly that it does not disturb the measuring. If, instead, column elements should be used as shunt elements, the temperature of the whole column would increase, involving thermal expansion in case of compressive load. A correct measuring value would then be only obtained after a long time, after the heat has been discharged to the surrounding environment.

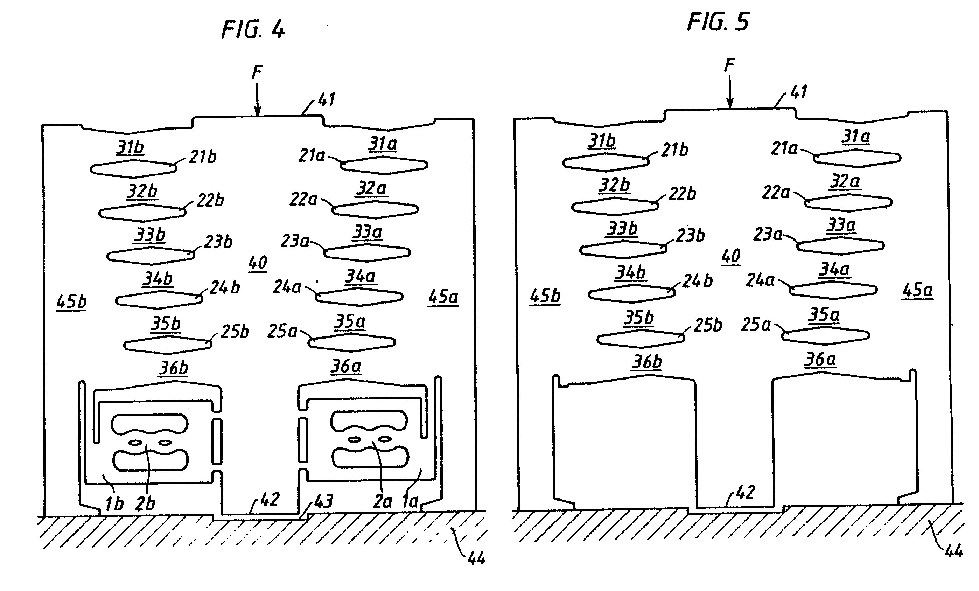

A force-shunted magnetoelastic force transducer according to the above-mentioned points of view and including transducer elements of the type described above, is shown in Figure 4. The core is symmetrically formed with a central column 40 having application surface 41 for the force to be measured and a lower support surface 42, which takes up any overload against a somewhat countersunk surface 43 in a fixed base 44. The core has two outer columns 45a and 45b which take up the load-caused reaction force from the fixed base 44 within the measuring range. Between the central column and each of the two outer columns, the core plates are provided with a number of oblong holes 21a—25a and 21b—25b. The material between the holes forms a number of parallel, force-carrying beams 31a—36a and 31b—36b. Thus, the central column and the two outer columns are connected by the beams and by the two transducer elements 1a and 1b of the type described above, arranged in parallel with the beams. These transducer elements are each provided with an excitation winding (not shown), supplied with alternating current, for generating a magnetic flux in the measuring beams 2a, 2b, respectively, said beams, when being loaded, being subjected to a double bending. Each beam is formed with two through-holes, preferably symmetrically located with respect to the longitudinal symmetry plane of the beam and, in the longitudinal direction of the beam, located on one side each of the point of inflection of the beam. A measuring winding (not shown) is wound through the holes of each beam 2a, 2b.

When applying a force F on the transducer, the transducer elements will only take up a certain fraction of the force F while the rest will be taken up by the beams 31a—36a and 31b—36b. By a suitable choice of the number of beams and of their dimensions in relation to the transducer elements, any desired degree of force shunting can be obtained.

Because the countersunk surface 43 lies below the otherwise plane surface of the base 44, there will be a small gap between the central column 40 and the base 44 under normal load conditions; however, this gap disappears in case of overload, which is then taken up by the column thereby prevented from charging the transducer elements.

With measuring elements and shunt elements made of the same material, in this case made in the same sheet section, the force-shunted force transducer will have approximately the same good properties as the single measuring element itself.

In case of large forces, it would be expensive simply to add additional sheets in proportion to the force. Because of the complicated structure in the transducer portion of the sheet, the sheet section has to be etched, which is an expensive manufacturing method compared with punching. It has therefore proved to be suitable to change to external force shunting for great forces, whereby separate punched shunt sheets can be used.

The shunt sheets can suitably be constructed to be exactly identical with the measuring sheets, for example according to Figure 4, but with the exception that the portions for the transducer elements 1a and 1b are totally removed in the punching process thereby forming large openings as shown in Figure 5.

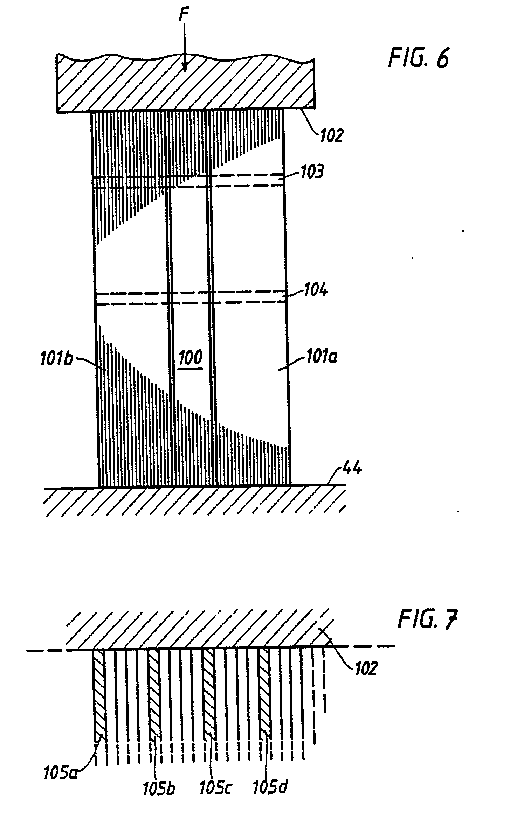

From these shunt sheets force-shunting cores are composed for example by bonding, which a thickness dependent on the desired measuring range. Two such cores 101a and 101b can be arranged as shown in Figure 6 in parallel with and at a small distance from the measuring core 100 and one on each side thereof. They are flexibly attached to core 100, for example by means of resilient tube pins 103, 104, through the upper parts of the outer columns. The assembled core package is ground to the same dimension in the force direction for the different cores and is positioned between parallel, plane force application surfaces 44 and 102 with a shallow ground recess 43 in the surface 44 right in front of the lower ends of the central columns, as shown in Figures 4 and 5, so as to obtain a constant shunting relationship within the measuring range and overload protection at too high a load.

Another alternative is to assemble measuring sheets according to Figure 4, either individually or in groups, with only shunting sheets according to Figure 5 into a package with a preferably even distribution for the measuring sheets or the groups of sheets, and to connect the sheets together, for example by bonding. After grinding of the force application surfaces, the core package is positioned between force application surfaces 44, 102 in the same manner as described for the preceding alternative.

Figure 7 shows an example of the latter embodiment. Only part of the upper force application surface 102 and part of the core sheets are shown. The measuring sheets 105a—105d are constructed, for example according to Figure 4, and are evenly distributed over the thickness of the sheet package. The intermediate sheets are shunting sheets constructed, for example, according to Figure 5.

**Claims**

1. Magnetoelastic force transducer comprising a closed core (1) of laminated or solid magnetoelastic material, provided with an excitation winding (22) to be supplied with alternating current, the core of the transducer providing in its measuring part at least two paths for the magnetic flux, whereby a measuring winding (23) is arranged such as to sense the flux changing from one side of said paths to the other under the effect of a force to be measured, characterized in that the measuring part of the core consists of a beam (21) with a magnetically preferred direction being uniform throughout the beam, that the measuring beam (21) at either end widens into force introduction regions (A, B) having greater height than the measuring beam, that the measuring beam, on applying a force on the core, is subjected to double bending, that, to provide said two paths for the magnetic flux, the measuring beam (21) is formed with two through-holes (24, 25), each of which is located in the beam's longitudinal direction on either side of the point of inflection of the measuring beam, and that the measuring winding (23) is wound in through said through-holes (24, 25).

2. Force transducer according to claim 1, characterized in that the measuring beam (21) is symmetrically formed with respect to the longitudinal symmetry plane of the measuring beam and/or that the two through-holes (24, 25) are symmetrically located with respect to the longitudinal symmetry plane of the measuring beam.

3. Force transducer according to claim 1 or 2, characterized in that the measuring beam (21) of the core is surrounded with an excitation winding (22), and that said force introduction regions (A, B) are connected through additional beams (27, 29) located on either side of the measuring beam (21), these beams (27, 29) being dimensioned so as on the one hand to serve as return paths for the magnetic flux and on the other hand to bring about a substantially pure parallel guiding of the force introduction regions.

4. Force transducer according to claim 3, characterized in that one force introduction region (A) is rigidly fastened and the other is arranged to be loaded with the force (F) to be measured.

5. Force transducer according to any of the preceding claims characterized in that the core is constructed in such a way that said measuring beam (21) of the core upon loading of the transducer is subjected to double bending as well as to a load-proportional superimposed compressive or tensile force in the longitudinal direction of the beam, for example by forming one force introduction region (B) with areas (a, b) having different widths above and below the measuring beam (21).

6. Force transducer according to any of claims 4 or 5, characterized in that it consists of two mirror-inverted force transducer elements of said type, constructed in one integral unit together with a central region (C) to which the force (F) to be measured is applied and to which the two rigidly fastened force introduction regions of the two transducer elements are connected, and in that the two outer force introduction regions (D, E), provided with laterally flexible force transmitting elements, take up the reaction force from a fixed base (G).

7. Force transducer according to claim 6, characterized in that the central force-receiving region (C) has been extended vertically into a central column (40) with a force application surface (41) for the force to be measured, that the two outer force introduction regions (D, E) have been extended vertically into two outer columns (45a, 45b) which take up the reaction forces from the base (44), and that between the central column and each of the two outer columns there are arranged a number of parallel, force-carrying beams (31a—36a; 31b—36b).

8. Force transducer according to claim 7, characterized in that in addition to a measuring core (100) provided with two transducer elements (1a, 1b) it comprises one or two solely force-shunting cores (101a, 101b) of the same design, with the exception that the transducer elements are omitted and replaced by open cut-outs, that said force-shunting cores are arranged in parallel with the measuring core (100) on either side thereof, to which they are flexibly attached, for example by means of resilient tube pins (103, 104) through the outer columns, and that the assembled core package is jointly ground to the same dimensions on the different cores, measured in the direction of the force, and arranged between parallel, plane force application surfaces (102, 44).

9. Force transducer according to claim 6, characterized in that the core is composed of a number of first sheets provided with transducer elements (1a, 1b) and with a number of second sheets which have instead of the transducer elements open cutouts but are otherwise identical with said first sheets, whereby the first sheets, either individually or in groups, are preferably arranged evenly distributed in the core.

10. Force transducer according to any of claims 6—9, characterized in that the central force-receiving column (40) has a support surface (42) at its lower end at such a height above the base (44) that in case of load within the normal measuring range a gap remains between said column and the base whereas in case of overload said column rests on the base.

**Patentansprüche**

1. Magnetoelastischer Kraftgeber mit einem geschlossenen Kern (1) aus lamelliertem oder massivem magnetoelektrischem Material, welcher eine mit Wechselstrom gespeiste Erregerwicklung (22) trägt und der in seinem Meßteil mit mindestens zwei Pfaden für den magnetischen Fluß versehen ist, wobei eine Meßwicklung (23) derart angeordnet ist, daß sie den Fluß mißt, der unter der Wirkung der zu messenden Kraft aus dem einen Pfad in den anderen überwechselt, dadurch gekennzeichnet, daß der Meßteil des Kerns aus einem Steg (21) mit einer in dem gesamten Steg vorhandenen magnetisch bevorzugten Richtung besteht, daß der Meßsteg (21) an jedem Ende sich in je einem Krafteinführungsabschnitt (A, B) erweitert, der eine größere Höhe als der Meßsteg hat, daß der Meßsteg bei der Beaufschlagung des Kerns mit einer Kraft eine doppelte Biegung erfährt, daß der Meßsteg (21) zur Erzeugung der beiden Pfade für den magnetischen Fluß mit zwei durchgehenden Löchern (24, 25) versehen ist, von denen jedes in Längsrichtung des Steges an je einer Seite des Wendepunktes des Meßsteges liegt, und daß die Meßwicklung (23) durch die durchgehenden Löcher (24, 25) gewickelt ist.

2. Magnetoelastischer Kraftgeber nach Anspruch 1, dadurch gekennzeichnet, daß der Meßsteg (21) symmetrische in bezug auf die längsverlaufende Symmetrieebene des Meßstegs ausgebildet ist und/oder daß die beiden durchgehenden Löcher (24, 25) symmetrisch in bezug auf die längsgehende Symmetrieebene des Meßsteges angeordnet sind.

3. Magnetoelastischer Kraftgeber nach einem der Ansprüche 1 oder 2, dadurch gekennzeichnet, daß der Meßsteg (21) des Kerns mit einer Erregerwicklung (22) umgeben ist und daß die genannten Krafteinführungsabschnitte (A, B) durch zusätzliche Stege (27, 29) zu jeder Seite des Meßsteges (21) miteinander verbunden sind, wobei diese Stege (27, 29) derart bemessen sind, daß sie einerseits als Rückschlußpfade für den magnetischen Fluß dienen und andererseits eine im wesentlichen rein parallele Führung der Krafteinführungsabschnitte bewirken.

4. Magnetoelastischer Kraftgeber nach Anspruch 3, dadurch gekennzeichnet, daß der eine Krafteinführungsabschnitt (A) fest eingespannt is und der andere Krafteinführungsabschnitt zur Einleitung der zu messenden Kraft (F) dient.

5. Magnetoelastischer Kraftgeber nach einem der vorhergehenden Ansprüche, dadurch gekennzeichnet, daß der Kern derart aufgebaut ist, daß der Meßsteg (21) des Kerns bei der Beaufschlagung des Gebers durch eine Kraft sowohl einer doppelten Beigung als auch einer lastproportionalen überlagerten Druck- oder Zugkraft in Längsrichtung des Steges ausgesetzt ist, beispielsweise durch Ausbildung eines Krafteinführungsabschnittes (B) mit Bereichen (a, b) die unterschiedliche Breiten oberhalb und unterhalb des Meßsteges (21) haben.

6. Magnetoelastischer Kraftgeber nach einem der Ansprüche 4 oder 5, dadurch gekennzeichnet, daß er aus zwei spiegelbildlich zueinander ausgebildeten Kraftgeberelementen der genannten Art besteht, die zusammen mit einem zentralen Abschnitt (C) eine integrale Einheit bilden, wobei der zentralen Abschnitt (C) von der zu messenden Kraft (F) beaufschlagt wird und die beiden starr befestigten Krafteinführungsabschnitte mit dem zentralen Abschnitt verbunden sind, und daß die beiden äußeren Krafteinführungsabschnitte (D und E), die mit seitlichen flexiblen Kraftübertragungselementen versehen sind, die Reaktionskräfte eines festen Fundamentes (G) aufnehmen.

7. Magnetoelastischer Kraftgeber nach Anspruch 6, dadurch gekennzeichnet, daß der zentrale Krafteinführungsabschnitt (C) mit einer in vertikaler Richtung hervortretenden zentralen Säule versehen ist, die eine Krafteinleitungsfläche (41) für die zu messende Kraft hat, daß die beiden äußeren Krafteinführungsabschnitte (D und E) sich in vertikaler Richtung in zwei äußere Säulen (45a, 45b) erstrecken, welche die Reaktionskräfte von dem Fundament (44) aufnehmen, und daß zwischen der zentralen Säule und jeder der beiden äußeren Säulen eine Anzahl von parallelen kraftaufnehmenden Stegen (31a—36a; 31b—36b) vorhanden sind.

8. Magnetoelastischer Kraftgeber nach Anspruch 7, dadurch gekennzeichnet, daß dieser zusätzlich zu einem mit zwei Geberelementen (1a, 1b) versehenen Meßkern (100) ein oder zwei lediglich einen Teil der Kraft aufnehmende Kerne (101a, 101b) gleichen Aufbaus enthält mit der Ausnahme, daß die Geberelemente weggelassen und durch offene Ausschnitte ersetzt sind, daß diese einen Teil der Kraft aufnehmenden Kerne parallel zum Meßkern (100) auf je einer Seite desselben angeordnet und an diesem flexibel befestigt sind, beispielsweise mittels durch die äußeren Säulen verlaufende elastische Rohrstifte (103, 104), und daß das vereinigte Kernpaket gemeinsam auf gleiche Abmessungen der verschiedenen Kerne geschliffen ist, gemessen in Richtung der Kraft, und zwischen parallelen ebenen Krafteinleitungsflächen (102, 44) angeordnet ist.

9. Magnetoelastischer Kraftgeber nach Anspruch 6, dadurch gekennzeichnet, daß der Kern aus einer Anzahl erster Bleche zusammengesetzt ist, die mit Geberelementen (1a, 1b) versehen sind und aus einer Anzahl zweiter Bleche, die anstelle der Geberelemente offene Ausschnitte haben, aber im übrigen mit den ersten Blechen identisch sind, wobei die ersten Bleche entweder einzeln oder in Gruppen vorzugsweise gleichmäßig verteilt in dem Kern angeordnet sind.

10. Magnetoelastischer Kraftgeber nach einem der Ansprüche 6 bis 9, dadurch gekennzeichnet, daß die zentrale kraftaufnehmende Säule (40) an ihrem unteren Ende mit einer Stützfläche (42) versehen ist, die in einer solchen Höhe über dem Fundament (44) liegt, daß im Falle einer Last innerhalb des normalen Meßbereiches ein Spalt zwischen der genannten Säule und dem Fundament vorhanden bleibt, während im Falle einer Überlast diese Säule auf dem Fundament aufsetzt.

**Revendications**

1. Transducteur de force magnéto-élastique comprenant un circuit magnétique fermé (1) en matière magnéto-élastique massive ou feuilletée, comportant un enroulement d'excitation (22) destiné à recevoir un courant alternatif, le circuit magnétique du transducteur définissant dans sa partie de measure au moins deux chemins pour le flux magnétique, grâce à quoi un enroulement de mesure (23) est disposé de façon à détecter le flux qui passe de l'un de ces chemins vers l'autre sous l'effet d'une force à mesurer, caractérisé en ce que la partie de mesure du circuit magnétique consiste en un barreau (21) ayant une direction préférentielle au point de vue magnétique qui est uniforme dans tout le barreau, en ce que le barreau de mesure (21) s'élargit à chaque extrémité pour former des régions d'introduction de force (A, B) ayant une hauteur supérieure à celle du barreau de mesure, en ce que le barreau de mesure est soumis à une double flexion lorsqu'on applique une force au circuit magnétique, en ce que le barreau de mesure (21) comporte deux trous traversants (24, 25) pour définir les deux chemis pour le flux magnétique, chacun de ces trous se trouvant, dans la direction longitudinale du barreau, de part et d'autre du point d'inflexion du barreau de mesure, et en ce que l'enroulement de mesure (23) est bobiné dans les trous traversants (24, 25).

2. Transducteur de force selon la revendication 1, caractérisé en ce que le barreau de mesure (21) est formé de façon symétrique par rapport au plan de symétrie longitudinal du barreau de mesure, et/ou en ce que les deux trous tranversants (24, 25) sont disposés de façon symétrique

**0 089 916**

par rapport au plan de symétrie longidudinal du barreau de mesure.

3. Transducteur de force selon la revendication 1 ou 2, caractérisé en ce que le barreau de mesure (21) du circuit magnétique est entouré par un enroulement d'excitation (22), et en ce que les régions d'introduction de force (A, B) sont reliées par des barreaux supplémentaires (27, 29) disposés de part et d'autre du barreau de mesure (21), ces barreaux (27, 29) étant dimensionnés d'une part de façon à constituer des chemins de retour pour le flux magnétique, et d'autre part de façon à réaliser un guidage parallèle pratiquement pur des régions d'introduction de force.

4. Transducteur de force selon la revendication 3, caractérisé en ce qu'une région d'introduction de force (A) est fixé de façon rigide. et l'autre est prévue pour être chargée par la force (F) à mesurer.

5. Transducteur de force selon l une quelconque des revendications précédentes, caractérisé en ce que le circuit magnétique est construit d'une manière telle que le barreau de mesure (21) du circuit magnétique est soumis, lorsque le transducteur est chargé, à une double flexion ainsi qu'à une force de compression ou de traction superposée, proportionnelle à la charge et s'exerçant dans la direction longitudinale du barreau, par exemple en formant dans une région d'introduction de force (B) des zones (a, b) ayant des largeurs différentes au-dessus et au-dessous du barreau de mesure (21).

6. Transducteur de force selon l'une quelconque des revendications 4 ou 5, caractérisé en ce qu'il consiste en deux éléments de transducteur de force du type précité, qui sont l'image l'un de l'autre dans un miroir, et qui sont construits en un seul ensemble avec une région centrale (C) à laquelle la force (F) à mesurer est appliquée, et à laquelle les deux régions d'introduction de force fixées de façon rigide des deux éléments de transducteur sont reliées, et en ce que les deux régions d'introduction de force extérieures (D, E), munies d'éléments de transmission de force flexibles de direction latérale, absorbent la force de réaction provenant d'une base fixe (G).

7. Transducteur de force selon la revendication 6, caractérisé en ce que la région centrale de réception de force (C) est étendue verticalement pour former une colonne centrale (40), avec une surface d'application de force (41) pour la force à mesurer, en ce que les deux régions d'introduction de force extérieures (D, E) sont étendues verticalement pour former deux colonnes extérieures (45a, 45b) qui absorbent les forces de réaction provenant de la base (44), et en ce qu'un certain nombre de barreaux parallèles de support de force (31a—36a; 31b—36b) sont disposés entre la colonne centrale et chacune des deux colonnes extérieures.

8. Transducteur de force selon la revendication 7, caractérisé en ce que, en plus d'un circuit magnétique de mesure (100) équipé de deux éléments de transducteur (1a, 1b), il comprend un ou deux circuits magnétiques (101a, 101b) ayant exclusivement une fonction de dérivation de force et ayant la même conception, à l'exception du fait que les éléments de transducteur sont supprimés et remplacés par des encoches, en ce que ces circuits magnétiques de dérivation de force sont disposés en parallèle avec le circuit magnétique de mesure (100), de part et d'autre de celui-ci, en lui étant fixés de façon flexible, par exemple au moyen de goupilles tubulaires élastiques (103, 104) traversant les colonnes extérieures, et en ce que le bloc de circuits magnétiques assemblés est meulé globalement aux mêmes dimensions pour les différents circuits magnétiques, mesurées dans la direction de la force, et il est disposé entre des surface d'application de force planes et parallèles (102, 44).

9. Transducteur de force selon la revendication 6, caractérisé en ce que le circuit magnétique est constitué par un certain nombre de premières tôles comportant des éléments de transducteur (1a, 1b) et par un certain nombre de secondes tôles qui comportent des encoches à la place des éléments de transducteur mais qui sont ailleurs identiques aux premières tôles, et les premières tôles, considérées individuellement ou par groupes, sont de préférence réparties uniformément dans le circuit magnétique.

10. Transducteur de force selon l'une quelconque des revendications 6 à 9, caractérisé en ce que la colonne centrale de réception de force (40) comporte à son extrémité inférieure une surface de support (42) située à une hauteur au-dessus de la base (44) telle qu'en présence d'une charge comprise dans la plage de mesure normale, il reste un espace entre la colonne et la base, tandis qu'en cas de surcharge la colonne repose sur la base.

FIG. 1

210 24 22 25 211

A B

212 23 213

29 21

FIG. 2

27 21

A a B

b

29

FIG. 3

27 21 27' 21'

D C E

29 G 29'

1

FIG. 4

FIG. 5

0 089 916

FIG. 6

FIG. 7